# EUROPÄISCHE PATENTSCHRIFT

(11) **EP 0 563 210 B1**
(45) Veröffentlichungstag und Bekanntmachung des Hinweises auf die Patenterteilung: **27.03.1996**
(21) Anmeldenummer: 92902000.6
(22) Anmeldetag: 19.12.1991
(51) Int. Cl.: B29C 45/26

(54) **ABNEHMBARER EINSATZ FÜR GIESSFORMEN UND GIESSFORM ZUM HERSTELLEN VON FORMTEILEN**
REMOVABLE INSERT FOR CASTING MOULDS AND MOULD FOR PRODUCING CASTINGS
INSERT AMOVIBLE POUR MOULES DE COULEE ET MOULE DE COULEE POUR LA FABRICATION DE PIECES MOULEES

(30) Priorität: 21.12.1990 DE 4041330
(43) Veröffentlichungstag der Anmeldung: 06.10.1993
(73) Patentinhaber: WIESER, Marianne, D-97737 Gemünden (DE)
(72) Erfinder: WIESER, Marianne, D-97737 Gemünden (DE)
(74) Vertreter: Hansmann, Axel, Dipl.-Wirtsch.-Ing.
(86) Internationale Anmeldenummer: EP9102461
(87) Internationale Veröffentlichungsnummer: WO9211123

(56) Entgegenhaltungen:
- EP-A- 0 287 203
- WO-A-90/08022
- GB-A- 2 229 670
- US-A- 3 871 611

## Beschreibung

Die Erfindung bezieht sich auf einen abnehmbaren Einsatz für Gießformen gemäß dem Oberbegriff des Anspruches 1.

Die Erfindung betrifft auch eine Gießform zum Herstellen von Formwerkstücken gemäß dem Oberbegriff des Anspruchs 13.

Insbesondere für das Spritzgießverfahren gibt es bereits Formen, deren Hohlraum durch Verwendung von Einsätzen derart veränderbar ist, daß beispielsweise mit einer solchen Gießform immer Werkstücke von ein und derselben Grundgestalt hergestellt werden können, wobei jedoch in bestimmten Bereichen des Werkstückes dann je nach Verwendungszweck unterschiedliche Formgestaltungen erfolgen. So lassen sich beispielsweise mit ein und derselben Grundform im Spritzgießverfahren Gehäuse für verschiedene Fernsehgeräte herstellen, die im wesentlichen die gleiche Grundgestalt haben müssen, aber doch in Einzelheiten abweichen, die also beispielsweise je nach dem Modell des Fernsehgerätes an verschiedenen Stellen mit Ausnehmungen versehen sein müssen.

Um solche Ausnehmungen zu erzeugen, müssen in dem Formhohlraum einer entsprechenden Spritzgießform der Gestalt der gewünschten Ausnehmung entsprechende Einsätze vorgesehen sein. Bisher hat man zur Anbringung von Einsätzen beispielsweise die Formen von der Aussenseite her angebohrt und dann den Einsatz mittels einer von aussen her durch die Bohrung eingeführten Schraube festgeschraubt. So zeigt die DE-OS 22 55 045 eine zweigeteilte Druckgußform, deren eingesetzter Amboß mittels von der Außenseite der Form her betätigbarer Schraubbolzen in der Form befestigt ist.

Bei einer derartigen Vorgehensweise bleibt zwar die die Form des Werkstückes bestimmende Gestalt des Einsatzes unbeeinträchtigt, während jedoch andererseits die von der Aussenseite der Form her angebrachten Bohrungen unerwünschten Bauaufwand und Rüstzeiten bedingen und möglicherweise auch die Anbringung von Temperierkanälen und dgl. stören.

Wird in einen runden Formeinsatz von außen her eine zentrale Schraube eingeschraubt, kann sich bei Erschütterungen auch ein unerwünschtes Losdrehen des Einsatzes ergeben.

Aus der GB-A 22 29 670, die dem Oberbegriff des Anspruchs 1 zugrundeliegt, ist bereits eine Spritzgießform bekannt, bei der an einem Formunterteil auf der Seite der Trennfläche zwischen den Formhälften ein Formeinsatz mittels einer Schraube angebracht ist, deren Schraubenschlitz freiliegt und die von der Innenseite der Form her in die Innenwand des Formunterteiles eingeschraubt ist. Der Einsatz steht von der Trennfläche vor und liegt bündig daran an. Er dient als Schließstück für einen Formkanal der anderen Formhälfte und wirkt mit diesem Kanal auch als Scherelement zusammen.

Das DE-GM- 82 33 634 zeigt einen sogenannten Ident-Einsatz, der zur Kennzeichnung von im Spritzgießverfahren herstellbaren
Werkstücken in das Spritzgießwerkzeug einsetzbar und in die Formwand versenkt ist. Dabei ist auf der Innenseite der Spritzgießform eine Gewindebohrung vorgesehen, in die eine Schraube einsetzbar ist, die sich ihrerseits mit ihrem Kopf in einer Ausnehmung eines Ringes abstützt, der in einer Ausnehmung der Formwand untergebracht ist. Dabei liegt der Schraubenschlitz bündig mit der Oberfläche des Ringes im Formhohlraum frei.

Die vorstehend erläuterten bekannten Befestigungen von Formeinsätzen von der Forminnenseite her vermeiden zwar bereits ein Durchbohren der Formwände von außen her, welches arbeitsaufwendig ist und auch die Anbringung von Temperierkanälen und dgl. stören, sowie auch die Formherstellung nach der nur von fünf Seiten her vorzunehmenden computergestützten CC-Technik verhindern
könnte; dabei bedingen aber bei diesen bekannten Befestigungen die freiliegenden Schraubenköpfe nicht nur unerwünschte Abdrücke an herzustellenden Werkstücken, sondern es sind auch solche Befestigungen hinsichtlich der verschiedenen Verwendungszwecke von Gießformeinsätzen nur von bedingtem Nutzen und auch insbesondere hinsichtlich ihrer Demontierbarkeit verbesserungsbedürftig.

Der vorliegenden Erfindung liegt die Aufgabe zugrunde, einen abnehmbaren Einsatz für Gießformen der in Rede stehenden Art zu schaffen, der auf einfache Weise von der Innenseite der Gießform her angebracht und demontiert werden kann, ohne daß
die Befestigungselemente des Einsatzes die Formgestalt des Einsatzes beeinträchtigen oder Bauweise oder Betrieb der Form stören. Dabei soll der Einsatz mit seiner Befestigung auch den Erfordernissen unterschiedlicher Verwendungszwecke solcher Einsätze Rechnung tragen, und insbesondere auch denen von in die Formwandung eingelassenen Einsätzen.

Diese Aufgabe wird mit den Merkmalen des Anspruchs 1 gelöst.

Die vorgeschlagene Konstruktion zeichnet sich dadurch aus, daß die in dem Einsatz versenkte Befestigungsschraube die Gestalt des Einsatzes und auch Bauweise und Betriebsweise der Form nicht beeinträchtigt, zugleich aber auch als Antriebselement nicht nur zum Heranführen, sondern auch zum
zwangsweisen Heraustreiben des Einsatzes aus der Formwandung dienen kann.

Die Einsätze nach der Erfindung lassen sich somit günstig zur Erzielung unterschiedlicher Formgestalten in bestimmten Bereichen von sonst gleichen Formwerkstücken oder aber auch als Konstruktionselemente der Formen selbst, wie Führungsstücke, Verriegelungen, Schrägzugelemente, Druckstücke und dgl. verwenden und gewährleisten deren sicheren Sitz und Montage und Demontage.

Von besonderem Vorteil sind Einsätze gemäß der vorliegenden Erfindung auch im Zusammenhang mit der CC-Technik, also dem computergestützten Formenbau, bei welchem Formplatten nur von fünf Seiten her wirtschaftlich bearbeitet werden können,
während die Bearbeitung von der Rückseite her wirtschaftlich nicht vorgenommen werden kann. Die von der Vorderseite her anbringbaren Einsätze nach der vorliegenden Erfindung sind gerade für diesen Anwendungsfall von besonderem Vorteil.

In den Unteransprüchen sind vorteilhafte Ausgestaltungen und Weiterbildungen des im Anspruch 1 dargestellten erfindungsgemäßen Einsatzes angegeben.

Die Erfindung bezieht sich auch auf mit Einsätzen gemäß der vorgenannten Ansprüche ausgestaltete Gießformen zur Herstellung von Werkstücken, nach Anspruch 13.

Es folgt die Beschreibung von Ausführungsbeispielen der Erfindung anhand von Zeichnungen.
Fig. 1 zeigt einen in eine Formhälfte eingebauten Einsatz (mit Fixierstift für einen Haltekörper der Befestigungsschraube)
Fig. 2 zeigt einen der Fig. 1 entsprechenden Einsatz, jedoch von der Formhälfte abgenommen (und mit einem Gewinde zur Fixierung des Haltekörpers).
Fig. 3 zeigt eine aus zwei Formhälften (Formplatten) bestehende Form mit mehreren eingebauten Einsätzen,
Fig. 4 zeigt schaubildlich ein mit der Form gemäß Fig. 3 zu gießendes Formwerkstück.

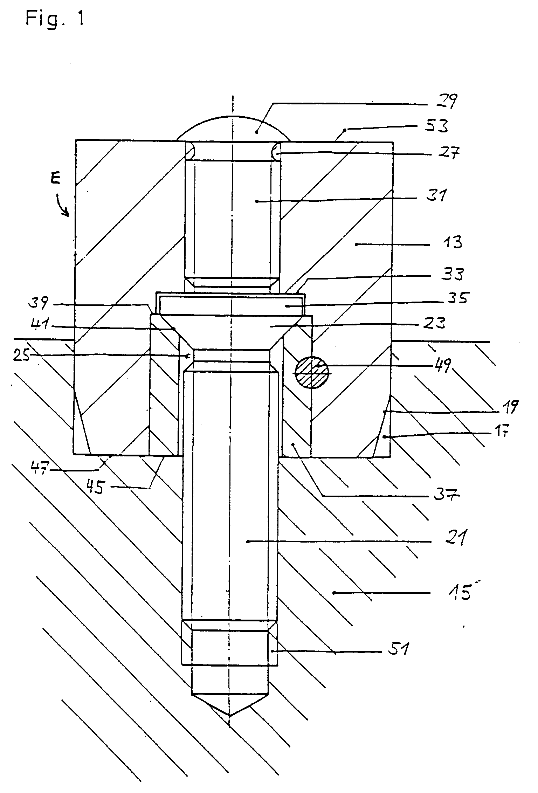

Fig. 1 zeigt einen Einsatz für Gießformen, mit denen Formwerkstücke hergestellt werden können.

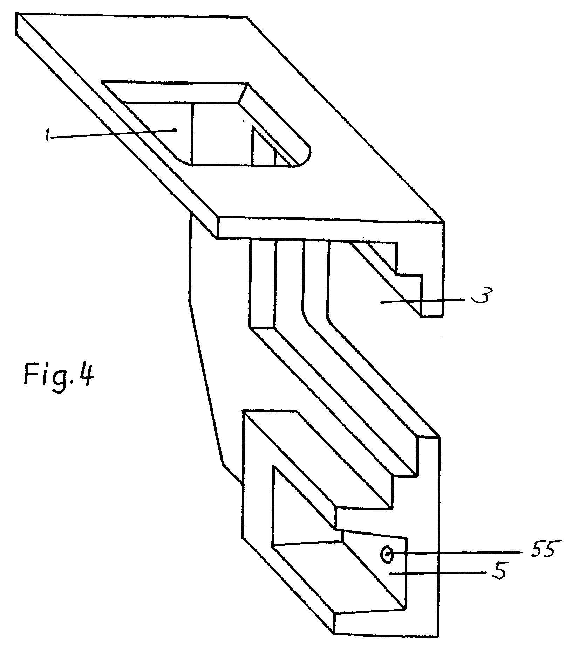

Ein solches Formwerkstück ist in Fig. 4 gezeigt. Ein solches Formwerkstück kann aus gießbaren und spritzbaren Werkstoffen, und insbesondere aus Metallen und Kunststoffen hergestellt werden. Solche Formwerkstücke finden in vielfältigen Ausgestaltungen Verwendung als konstruktionsteile, Gehäuse etc. in den verschiedensten Bereichen der Technik. Dabei besteht die Notwendigkeit, solche Formwerkstücke nicht nur als einheitliche Platten, Winkelstücke, Hohlkörper u. dgl. auszugestalten, sondern es müssen an solchen Formwerkstücke auch Ansätze und Ausnehmungen, wie in Fig. 4 bei 1, 3 und 5 gezeigt, vorgesehen werden.

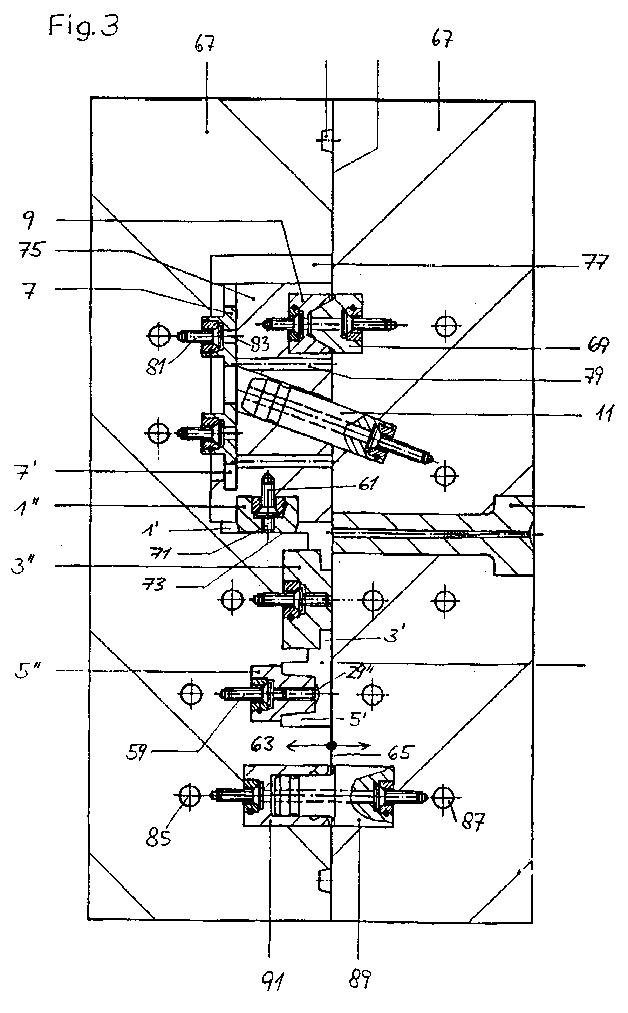

In Fig. 3 sieht man eine Gießform, mittels deren ein Formwerkstück in der in Fig. 4 gezeigten Gestaltung hergestellt werden kann. Die den Ausnehmungen 1, 3 und 5 des Formwerkstückes entsprechenden Bereiche der Form sind mit 1', 3' und 5' bezeichnet. Diese Bereiche 1', 3' und 5' sind somit Bestandteile des auszugießenden Formhohlraumes, und damit diese Ausnehmungen erzeugt werden können, müssen daher in dem Formhohlraum jeweils entsprechende Einsätze 1'', 3'' und 5'' vorgesehen sein.

In noch näher zu beschreibender Weise weist die in Fig. 3 gezeigte Gießform auch noch andere Einsätze 7, 9, 11 auf, die in noch näher zu beschreibender Weise zur Führung der Elemente der Form dienen.

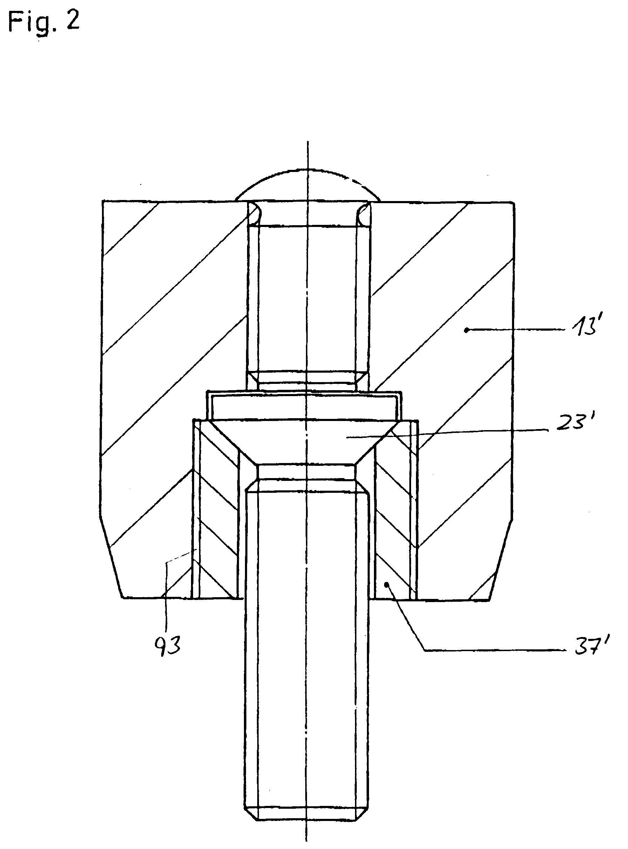

Die vorliegende Erfindung bezieht sich auf die Befestigung von Einsätzen der hier in Rede stehenden Art an der Innenwand des Formhohlraumes, und Fig. 1 und 2 veranschaulichen zwei Ausführungsbeispiele von solchen Einsätzen, bei denen es sich beispielsweise um die bei 5'' in Fig. 3 veranschaulichte Art eines Einsatzes zur Herstellung einer Ausnehmung an einem Werkstück handeln kann.

Der in Fig. 1 gezeigte Einsatz E hat ein Formstück 13, dessen Gestalt der Formgestalt des herzustellenden Formwerkstücks entspricht. In Fig. 1 ist mit 15 die Innenwand des Formhohlraumes der Gießform angedeutet und das Formstück 13 ist in eine entsprechende Ausnehmung 17 dieser Innenwand eingelassen.Dazu kann das Formstück eine leichte Abschrägung 19 aufweisen.

Das Formstück 13 des Einsatzes E ist an der Innenwand 15 mittels einer Befestigungsschraube 21 befestigt, die von der Innenseite der Form her in die Innenwand 15 eingeschraubt ist. Die Befestigungsschraube 21 sitzt mit ihrem Kopf 23 in einer Höhlung 25 des Einsatzes. Die Höhlung 25 des Einsatzes ist von der Seite des Formhohlraumes her über eine Zugangsbohrung 27 erreichtbar, die mit einer eine Kappe 29 aufweisenden Linsenkopfschraube 31 verschließbar ist. Die Höhlung 25 des Einsatzes E, in der die Befestigungsschraube 21 sitzt, weist auf der Seite der Zugangsbohrung 27 eine Schulter 33 auf, an der sich der mit einem Schraubenschlitz 35 versehene Eingriffsbereich der Befestigungsschraube in Richtung zu dem Formhohlraum hin abstützen kann. In Richtung zu der Innenwand 15 der Form hin ist der Schraubenkopf 23 mittels eines kranzförmigen Haltekörpers 37 abgestützt, der sich seinerseits an einer Schulter 39 der Höhlung 25 abstützt. Die Abmessungen der Höhlung 25, des kranzförmigen Haltekörpers 37, des Schraubenkopfes 23 und die Anordnung der Schultern 33 und 39 sind dabei so getroffen, daß der Schraubenkopf zwischen der Schulter 33 der Höhlung und einer schrägen Schulter 41 des Haltekörpers frei drehbeweglich ist.

Die auf der Seite der Formwand befindliche Stirnfläche 45 des kranzförmigen Haltekörpers ist dabei bündig mit der Stirnfläche 47 des Formstückes 13 des Einsatzes E

Bei der in Fig. 1 gezeigten Ausführungsform dient ein von der Seite her eingeführter Fixierstift 49 zur Herstellung einer kraftschlüssigen Verbindung zwischen dem Formstück 13 des Einsatzes E und dem kranzförmigen Haltekörper 37.

Zur Anbringung des Einsatzes E in der Innenwand 15 der Gießform wird zunächst die Befestigungsschraube 21 mittels des kranzförmigen Haltekörpers 37 lose drehbar mit dem Einsatz E verbunden, und es kann alsdann die Befestigungsschraube 21 mittels eines Schraubendrehers durch die Zugangsbohrung 27 (noch nicht durch die Linsenkopfschraube 31 verschlossen) betätigt werden. Es kann also beispielsweise ein schmaler Schraubenzieher durch die Zugangsbohrung 27 eingeführt und dann die Befestigungsschraube 21 in das Gewinde 51 der Innenwand der Form eingeschraubt werden, bis das Formstück 13 ganz in die Ausnehmung 17 hineingezogen ist. Die Befestigungsschraube 21 kann zweckmäßigerweise auch mit einem Innensechskant statt eines Schraubenschlitzes ausgerüstet sein, so daß als Schraubendreher dann ein Sechskant-Schlüssel dient. Nachdem das Formstück 13 auf diese Weise in der Ausnehmung 17 befestigt ist, wird die Zugangsbohrung 27 mittels der Linsenkopfschraube 31 verschlossen, wobei die Abmessung der Linsenkopfschraube 31 derart bemessen ist, daß der die Kappe 29 bildende Linsenkopf mit der äusseren Stirnfläche 53 am Umfang bündig ist. Das bedeutet, daß eine an einem gegossenen Werkstück mittels des Formstückes 13 hergestellte Ausnehmung dann nur eine flache linsenkopfförmige Einsenkung aufweist, so wie sie in Fig. 4 bei 55 beispielhaft angedeutet ist.

Die bisher anhand der Fig. 1 beschriebene Konstruktion eines Einsatzes E entspricht im wesentlichen der Konstruktion des Einsatzes 5'' der Fig. 3. Es ist daraus erkennbar, daß dieser Einsatz mit parallel zur Formöffnungsrichtung verlaufender Achslage der Befestigungsschraube 59 angeordnet ist. Weiter oben in Fig. 3 sieht man den Einsatz 1'', bei welchem die Befestigungsschraube 61 mit quer zur Öffnungsrichtung der Form verlaufender Achslage vorgesehen ist. (Die Öffnungsrichtung der Form ist in Fig. 3 durch den Doppelpfeil 63 ausgehend von der Trennebene 65 der Form angedeutet).

Aus Fig. 3 ist auch ersichtlich, daß die Kappe 29'' der die Höhlung des Einsatzes verschließenden Schraube für einen mit Bezug auf den Formhohlraum hinterschneidungsfreien Verschluß der Höhlung des Einsatzes sorgt. Mit anderen Worten können die beiden Elemente 67, 69 der Gießform (Formhälften) an ihrer Trennebene oder Trennfläche 65 auseinandergezogen werden und das hergestellte Formwerkstück (Fig. 4) herausgenommen werden, ohne daß irgendeine unerwünschte Verankerung des Formwerkstückes durch in hinterschnittene Hohlräume hineingeflossenes Gießmaterial gegeben wäre. Ein solcher hinterschneidungsfreier Verschluß der Zugangsbohrung zu der Befestigungsschraube des Einsatzes läßt sich auch dann erreichen, wenn beispielsweise dem in Fig. 3 gezeigten Einsatz 9 ein komplementär gestalteter Einsatz 69 gegenüberliegt und die einander zugekehrten Stirnseiten der beiden Einsätze einander abdichtend ergänzen, so daß das Gießmaterial keinen Zugang hat

Der in Fig. 3 gezeigte Einsatz 1'', der zur Herstellung der Ausnehmung 1 dem Formwerkstück der Fig. 4 dient, ist mit quer zur Öffnungsrichtung der Form liegender Achslage der Befestigungsschraube 61 angeordnet. Im Falle dieses Einsatzes ist ein hinterschneidungsfreier Verschluß der Zugangsbohrung 71 dadurch gewährleistet, daß die Stirnseite dieses Einsatzes bei geschlossener Form abdichtend an dem Wandstück 73 der Form anliegt, so daß auch hier kein Gießmaterial in die Zugangsbohrung eindringen kann.

Zu diesem Zweck sitzt der Einsatz 1'' an einem an der einen Formhälfte gelagerten Schieber 75, der mittels eines an der anderen Formhälfte vorgesehenen Schrägzugelement in Form des weiteren Einsatzes 11 verlagerbar ist. Die Einsätze 7 und 7' stellen T-Führungen dar, und bei 77 ist in Fig. 3 ein Schieberbewegungsraum angedeutet. Werden die beiden Formhälften 67 in Richtung des Doppelpfeiles 63 voneinander getrennt oder aufeinander zu bewegt, dann bewirkt das von dem Weiteren Einsatz 11 gebildete Schrägzugelement eine Verlagerung des Schiebers 75 derart, daß der Schieber 75 den die Ausnehmung 1 des Formwerkstückes bildenden Einsatz 1'' nach oben aus dem noch in der Form befindlichen Werkstück heraushebt, und das Werkstück dann herausgenommen werden kann. Werden die beiden Formhälften beim Schließen der Form gemäß dem Doppelpfeil 63 zueinander hin bewegt, dann verlagert das Schrägzugelement in Form des Einsatzes 11 den Schieber 75 derart, daß er die ihm zugedachte Funktion als Formgebungselement für die Ausnehmung 1 des Formwerkstückes ausüben und auch die Zugangsbohrung 71 durch Anlage an dem Wandstück 73 hinterschneidungsfrei abdichten kann. Die Bewegung des Schiebers 75 mittels des von dem Einsatz 11 gebildeten Schrägzugelementes sorgt auch dafür, daß die Zugriffsbohrung 79 in der erforderlichen Weise auf die Befestigungsschraube 81 des Einsatzes 7 ausgerichtet wird. Dabei sorgt der Schieber 75 für einen Abschluß der Zugangsbohrung 83 des Einsatzes 7.

Die beschriebene Befestigung der Einsätze von der Innenseite der Form her gestattet es auch, an den Formelementen Kühlbohrungen und Temperierkanäle der bei 85, 87, angedeuteten Art vorzusehen, ohne daß von der Außenseite der Form an die Einsätze herangeführte Befestigungsschrauben sich damit überschneiden könnten.

In der vorstehend beschriebenden Art von der Forminnenseite her angebrachte Einsätze lassen sich auch für die Anbringung einer Führungssäule 89 und entsprechender Führungsbuchse 91 ausgestalten, oder auch als Druckstück wie der Einsatz 9 sowie für andere Zwecke, bei denen an der Innenseite eines Formhohlraumes zusätzliche oder auch je nach Anwendungsfall zu ändernde Teile angebracht werden müssen. So können gemäß der vorliegenden Erfindung ohne Schwierigkeiten an Werkstücken Ausnehmungen unterschiedlicher Größe erzeugt werden, indem lediglich ein entsprechender Einsatz gegen einen anderen ausgetauscht wird. Dabei sind die Formgebung und die Größe des in dem Formhohlraum vorzusehenden Einsatzes unabhängig von der beschriebenen Art der Befestigung.

Die beschriebene Konstruktion hat auch den Vorteil, daß die Befestigungsschraube 21 zusätzlich zu ihrer Funktion als Befestigungselement für den Einsatz auch als Antrieb zum Hineinziehen des Einsatzes in die Ausnehmung 17 und zum zwangsweisen Heraustreiben des Einsatzes aus der Ausnehmung 17 dient. Diese Wirkung ergibt sich aus der erläuterten Abstützung des Kopfes der Befestigungsschraube an den beiden Schultern 33 und 41.

Die Abmessungen der Befestigungsschraube 21 und der Linsenkopfschraube 31 können auch so bemessen werden, daß letztere in eingesetztem Zustand als Conter-Schraube auf dem Kopf der Befestigungsschraube aufliegt. Je nach Anwendungsfall kann aber auch die Linsenkopfschraube 31 lediglich durch einen Stöpsel oder sonstigen hinterschneidungsfreien Verschluß für die Zugangsbohrung 27 ersetzt werden.

Die Fig. 2 zeigt eine konstruktiv geänderte Ausgestaltung bei welcher der kranzförmige Haltekörper 37' statt mittels eines Fixierstiftes (wie 49 in Fig. 1) zur kraftschlüssigen Sicherung in dem Einsatz 13' mit einem Gewinde 93 versehen ist, derart, daß der Kopf 23' der Befestigungsschraube 23'' unter Beibehaltung loser Drehbarkeit beidseitig abgestützt ist.

Unter Verwendung von Einsätzen der vorstehend erläuterten Art lassen sich auf günstige Weise Gießformen mit weitgehender Variabilität des Formhohlraumes für die herzustellenden Werkstücke auch mit variabel anzubringenden Führungsstücken, Führungssäulen u. dgl. erzeugen.

## Patentansprüche

1. Abnehmbarer Einsatz zur Befestigung an Formhälften von Gießformen mittels einer Befestigungsschraube (21), welche durch einen an ihrem Eingriffsbereich angreifenden Schraubendreher in die Befestigungslage überführbar ist, wobei
- der Eingriffsbereich der Befestigungsschraube zwischen den Trennflächen der Formhälften angeordnet ist und die Befestigungsschraube (21) in der Innenwand der Formhälften verankerbar ist,
- der Einsatz (E) eine Höhlung für die Befestigungsschraube aufweist, in der sich die Befestigungsschraube abstützt und die von der Trennflächenseite her für den Schraubendreher zugänglich ist, und
- die, die Befestigungsschraube aufnehmende Höhlung mit Bezug auf den Formhohlraum hinterschneidungsfrei verschließbar ist,
**dadurch gekennzeichnet,**
daß der Kopf (23) der Befestigungsschraube (21) drehbar zwischen zwei gegenüberliegenden Schultern (33, 41) des Einsatzes (E) aufgenommen ist, derart, daß der Einsatz (E) durch die Befestigungsschraube (21) bei der Betätigung zur Wand der Gießform hin bzw. davon weg antreibbar ist.

2. Einsatz nach Anspruch 1
dadurch gekennzeichnet,
daß die den Kopf der Befestigungsschraube auf der Seite der Wand der Gießform abstützende Schulter (41) an einem in dem Einsatz (13) befestigten Haltekörper (37) ausgebildet ist.

3. Einsatz nach Anspruch 2,
dadurch gekennzeichnet,
daß der Haltekörper ein Kranz (37) ist, dessen Achslage in dem Einsatz durch kraftschlüssige Verbindung mittels Gewinde, Fixierstift od. dgl. lösbar oder unlösbar befestigt ist.

4. Einsatz nach irgendeinem der voranstehenden Ansprüche,
dadurch gekennzeichnet,
daß die die Befestigungsschraube aufnehmende Höhlung (25) des Einsatzes mittels einer Kappe (29) verschließbar ist, die bündig an der Stirnfläche des Einsatzes anliegt.

5. Einsatz nach Anspruch 4,
dadurch gekennzeichnet,
daß die Kappe von dem Kopf (29) einer Linsenkopfschraube gebildet wird.

6. Einsatz nach einem oder mehreren der voranstehenden Ansprüche,
dadurch gekennzeichnet,
daß der Einsatz (13) zur Erzeugung von der Gestalt (1) des Einsatzes entsprechender Formgestaltung an dem zu gießenden Werkstück dient.

7. Einsatz nach einem oder mehreren der Ansprüche 1 bis 6,
dadurch gekennzeichnet,
daß der Einsatz zur Führung der Formhälften dient.

8. Einsatz nach einem oder mehreren der voranstehenden Ansprüche,
dadurch gekennzeichnet,
daß der Einsatz mit parallel zur Öffnungsrichtung der Form verlaufender Achslage der Befestigungsschraube angeordnet ist.

9. Einsatz nach einem oder mehreren der voranstehenden Ansprüche 1 bis 7,
dadurch gekennzeichnet,
daß der Einsatz mit quer zur Öffnungsrichtung der Form verlaufender Achslage der Befestigungsschraube angeordnet ist.

10. Einsatz nach einem oder mehreren der voranstehenden Ansprüche,
dadurch gekennzeichnet,
daß der Einsatz mit seiner die Zugangsöffnung der Höhlung aufweisenden Stirnfläche durch die Schließbewegung der Formhälften an einer Gegenfläche abdichtbar ist.

11. Einsatz nach einem oder mehreren der voranstehenden Ansprüche,
dadurch gekennzeichnet,
daß der Einsatz zum Einlassen in eine Ausnehmung (18) der Wand der Form ausgestaltet ist.

12. Einsatz nach Anspruch 11,
dadurch gekennzeichnet,
daß der Einsatz am Umfang eine Abschrägung (19) zur Einführung in die Ausnehmung (17) der Wand der Form aufweist.

13. Gießform zur Herstellung von Formwerkstücken mit zwei Formhälften und einem Formhohlraum sowie einem abnehmbaren Einsatz, der an einer Formhälfte mittels einer Befestigungsschraube befestigt ist, welche durch einen an ihrem Eingriffsbereich angreifenden Schraubendreher in die Befestigungslage überführbar ist, wobei
- der Eingriffsbereich der Befestigungsschraube zwischen den Trennflächen der Formhälften angeordnet ist und die Befestigungsschraube in der Innenwand der Formhälften verankerbar ist,
- der Einsatz eine Höhlung für die Befestigungsschraube aufweist, in der sich die Befestigungsschraube abstützt und die von der Trennflächenseite her für den Schraubendreher zugänglich ist, und
- die die Befestigungsschraube aufnehmende Höhlung mit Bezug auf den Formhohlraum hinterschneidungsfrei verschließbar ist,
gekennzeichnet durch
einen oder mehrere Einsätze nach einem oder mehreren der voranstehenden Ansprüche.

## Claims

1. A removable insert for securing mould halves of casting moulds by means of a securing screw (21) which may be transferred to the securing position by a screwdriver acting on its engagement region, where
- the engagement region of the securing screw is arranged between the parting surfaces of the mould halves and the securing screw (21) may be anchored in the inner wall of the mould halves,
- the insert (E) has a hollow for the securing screw, in which the securing screw is supported and which is accessible to the screwdriver from the parting surface side, and
- the hollow receiving the securing screw may be closed in a manner free of undercuts in relation to the mould cavity,
characterized in that
the head (23) of the securing screw (21) is rotatably received between two opposing shoulders (33, 41) of the insert (E) such that the insert (E) may be driven by the securing screw (21) on actuation towards the wall of the casting mould and away therefrom.

2. An insert according to Claim 1, characterized in that the shoulder (41) supporting the head of the securing screw on the casting mould wall side is constructed on a holding body (37) secured in the insert (13).

3. An insert according to Claim 2, characterized in that the holding body is a crown (37) whereof the axial position in the insert is secured in a detachable or non-detachable manner by force-fitting connection by means of thread, fixing pin or the like.

4. An insert according to any one of the preceding claims, characterized in that the hollow (25) of the insert receiving the securing screw may be closed by means of a cap (29) which bears flush against the end face of the insert.

5. An insert according to Claim 4, characterized in that the cap is formed by the head (29) of a lens head screw.

6. An insert according to one or more of the preceding claims, characterized in that the insert (13) serves to produce the shape (1) of the insert of corresponding shaping on the workpiece to be cast.

7. An insert according to one or more of Claims 1 to 6, characterized in that the insert serves to guide the mould halves.

8. An insert according to one or more of the preceding claims, characterized in that the insert is arranged with the axial position of the securing screw running parallel to the direction of opening the mould.

9. An insert according to one or more of the preceding Claims 1 to 7, characterized in that the insert is arranged with the axial position of the securing screw running transverse with respect to the direction of opening the mould.

10. An insert according to one or more of the preceding claims, characterized in that the insert, which has its end face having the access opening to the hollow, may be sealed against an opposite surface by means of the closing movement of the mould halves.

11. An insert according to one or more of the preceding claims, characterized in that the insert is constructed to be embedded in a cutout (18) in the wall of the mould.

12. An insert according to Claim 11, characterized in that the insert has on the periphery a chamfer (19) for introduction into the cutout (17) in the wall of the mould.

13. A casting mould for producing mould workpieces having two mould halves and a mould cavity and a removable insert which is secured to a mould half by means of a securing screw which may be transferred to the securing position by a screwdriver acting on its engagement region, where
- the engagement region of the securing screw is arranged between the parting surfaces of the mould halves and the securing screw may be anchored in the inner wall of the mould halves,
- the insert has a hollow for the securing screw, in which the securing screw is supported and which is accessible to the screwdriver from the parting surface side, and
- the hollow receiving the securing screw may be closed in a manner free of undercuts in relation to the mould cavity,
characterized by
one or more inserts according to one or more of the preceding claims.

## Revendications

1. Insert amovible pour la fixation sur des moitiés de moules de coulée, au moyen d'une vis de fixation (21) qui peut être amenée dans la position de fixation par un tournevis attaquant sa région d'engagement, dans lequel
- la région d'engagement de la vis de fixation est agencée entre les surfaces de séparation des moitiés de moule, et la vis de fixation (21) peut être ancrée dans la paroi intérieure des moitiés de moule,
- l'insert (E) présente un creux pour la vis de fixation, dans lequel la vis s'appuie de fixation et qui est accessible pour le tournevis depuis le côté de la surface de séparation, et
- le creux recevant la vis de fixation peut être refermé sans contre-dépouille par rapport à la cavité de moule,
caractérisé en ce que
la tête (23) de la vis de fixation (21) est reçue en rotation entre deux épaulements (33, 41) de l'insert (E) situés en vis-à-vis, de telle sorte que l'insert (E) peut être entraîné par la vis de fixation (21) lors de l'actionnement en direction de la paroi du moule de coulée ou en éloignement de celle-ci.

2. Insert selon la revendication 1,
caractérisé en ce que l'épaulement (41) supportant la tête de la vis de fixation du côté de la paroi du moule de coulée est réalisé sur un corps de retenue (37) fixé dans l'insert (13).

3. Insert selon la revendication 2,
caractérisé en ce que le corps de retenue est une couronne (37) dont la position axiale est fixée de façon amovible ou non amovible dans l'insert par liaison en coopération de forces au moyen d'un pas de vis, d'une tige de fixation ou similaire.

4. Insert selon l'une quelconque des revendications précédentes,
caractérisé en ce que le creux (25) de l'insert qui reçoit la vis de fixation peut être refermé au moyen d'un capuchon (29) qui s'appuie en affleurement contre la face frontale de l'insert.

5. Insert selon la revendication 4,
caractérisé en ce que le capuchon (29) est formé par la tête (29) d'une vis à tête bombée.

6. Insert selon l'une ou plusieurs des revendications précédentes,
caractérisé en ce que l'insert (13) sert à produire sur la pièce d'usinage à couler une forme moulée qui correspond à la forme (1) de l'insert.

7. Insert selon l'une ou plusieurs des revendications 1 à 6,
caractérisé en ce que l'insert sert au guidage des moitiés de moule.

8. Insert selon l'une ou plusieurs des revendications précédentes,
caractérisé en ce que l'insert est agencé avec la vis de fixation dans une position axiale qui s'étend parallèlement à la direction d'ouverture du moule.

9. Insert selon l'une ou plusieurs des revendications précédentes 1 à 7,
caractérisé en ce que l'insert est agencé avec la vis de fixation en position axiale qui s'étend transversalement à la direction d'ouverture du moule.

10. Insert selon l'une ou plusieurs des revendications précédentes,
caractérisé en ce que l'insert peut être étanché sur une contre-surface au niveau de sa surface frontale présentant l'ouverture d'accès du creux, par le mouvement de fermeture des moitiés de moule.

11. Insert selon l'une ou plusieurs des revendications précédentes,
caractérisé en ce que l'insert est réalisé pour être noyé dans un évidement (18) de la paroi du moule.

12. Insert selon la revendication 11,
caractérisé en ce que l'insert présente à la périphérie un biseau (19) pour l'enfilement dans l'évidement (17) de la paroi du moule.

13. Moule de coulée pour réaliser des pièces d'usinage, comportant deux moitiés de moule et une cavité de moule, ainsi qu'un insert amovible qui est fixé sur une moitié de moule au moyen d'une vis de fixation qui peut être amenée dans la position de fixation par un tournevis attaquant sa région d'engagement, dans lequel
- la région d'engagement de la vis de fixation est agencée entre les surfaces de séparation des moitiés de moule, et la vis de fixation peut être ancrée dans la paroi intérieure des moitiés de moule,
- l'insert présente un creux pour la vis de fixation, dans lequel la vis de fixation s'appuie et qui est accessible pour le tournevis depuis le côté de la surface de séparation, et
- le creux recevant la vis de fixation peut être refermé sans contre-dépouille par rapport à la cavité de moule,
caractérisé par un ou plusieurs inserts selon l'une ou plusieurs des revendications précédentes.
